# EUROPÄISCHE PATENTSCHRIFT

(11) **EP 1 736 693 B1**
(45) Veröffentlichungstag und Bekanntmachung des Hinweises auf die Patenterteilung: **11.03.2009**
(21) Anmeldenummer: 06012136.5
(22) Anmeldetag: 13.06.2006
(51) Int. Cl.: F16K 1/12, F16K 31/04

(54) **Koaxialventil**
Coaxial valve
Valve coaxiale

(30) Priorität: 21.06.2005 DE 102005028584
(43) Veröffentlichungstag der Anmeldung: 27.12.2006
(73) Patentinhaber: Astrium GmbH, 81663 München (DE)
(72) Erfinder: Gauss, Adolf, 86343 Königsbrunn (DE); Voit, Arno, 83734 Hausham (DE)
(74) Vertreter: Hummel, Adam

(56) Entgegenhaltungen:
- EP-A- 0 383 353
- EP-A- 1 371 885
- DE-A1- 19 960 330
- US-B1- 6 802 488

## Beschreibung

### TECHNISCHES GEBIET

Die Erfindung betrifft ein Koaxialventil nach den Oberbegriff des Patentanspruchs 1, insbesondere ein Koaxialventil für kryogene Fluide.

An Ventile, die zum Regeln und Absperren eines flüssigen oder gasförmigen Mediums unter extremen Bedingungen, wie chemischer Aggressivität, sehr hohen oder sehr tiefen Temperaturen oder unter sehr hohen Drücken dienen, werden besondere Anforderungen gestellt. Ein Anwendungsbereich von Ventilen, die dem Absperren eines flüssigen oder gasförmigen Mediums unter extremen Bedingungen dienen, sind Antriebe in der Luft- und Raumfahrt. Hier sind die Ventile extremen Temperaturen und extremen Temperaturänderungen ausgesetzt. Bei Ventilen für flüssige und gasförmige Raketentreibstoffe treten weitere Parameter hinzu, die die Anforderungen an derartige Ventile steigern, wie große Massenströme, hohe Drücke und kurze Schaltzeiten zum Öffnen und Schließen des Ventiles oder zum Anfahren einer bestimmten Ventilposition.

### STAND DER TECHNIK

Ein Ventil für kryogene Fluide ist aus der DE 199 60 330 C2 bekannt. Bei diesem bekannten Ventil wird die Ventilhülse axial in Bezug auf den im Strömungskanal stationären Verschlusskörper mittels eines Hebelmechanismus' bewegt, der von einem außerhalb des Ventilgehäuses vorgesehenen elektrischen Stellantrieb betätigt wird.

Dieses Ventil weist aufgrund des außen am Ventil angebrachten Stellmotors verhältnismäßig große Einbaumaße auf. Zudem ist die Betätigung über den Hebelmechanismus komplex und erhöht daher in einer für Raumfahrtanwendungen inakzeptablen Weise das Fehlfunktionsrisiko.

Aus der US 6,802,488 B1 ist ein gattungsgemäßes Koaxialventil mit den Merkmalen des Oberbegriffs des geltenden Patentanspruchs 1 bekannt. Bei diesem bekannten Koaxialventil wird die Antriebshülse über einen Riemenantrieb von einem außerhalb des Ventilgehäuses gelegenen Antriebsmotor drehbeaufschlagt. Da auch hier der Antrieb für das Ventil außen am Ventilgehäuses angebracht ist, weist auch dieses vorbekannte Ventil Einbaumaße auf, die für viele Anwendungsfälle zu groß sind. Außerdem besitzt der dort offenbarte Riemenantrieb nicht die Genauigkeit, die bei einem Stellmotor für Ventile für den Einsatz in der Raumfahrttechnik über einen längeren Zeitraum und über ein großes Temperaturschwankungsspektrum gefordert ist.

Aus der EP 0 383 353 A2 ist ein Koaxialventil bekannt, bei welchem der Antriebsmotor im Ventilgehäuse vorgesehen und koaxial zur Ventilachse ausgerichtet ist. Dieses Ventil weist jedoch keine Ventilhülse als Stellkörper und keinen Kugelumlaufspindelantrieb auf. Außerdem ist hier der Antriebsmotor einschließlich der Antriebshülse gegenüber dem Ventilgehäuse in Axialrichtung des Ventils fest gelagert, sodass dieses Ventil für hohe Temperaturunterschiede nicht geeignet ist.

### DARSTELLUNG DER ERFINDUNG

Aufgabe der Erfindung ist es, ein gattungsgemäßes Koaxialventil anzugeben, das bei kompakter Bauweise und niedriger Reibung sowie niedrigem Energieverbrauch besonders zuverlässig arbeitet und ein geringes Gewicht aufweist.

Diese Aufgabe wird durch die Merkmale des Patentanspruchs 1 gelöst.

Die Ventilhülse ist dazu zumindest abschnittsweise an ihrem Außenumfang mit zumindest einer rillenförmigen äußeren Wendelnut versehen und im Abschnitt der rillenförmigen äußeren Wendelnut von einer zur Ventilhülse koaxialen Antriebshülse umgeben. Die Antriebshülse ist an ihrem Innenumfang mit zumindest einer rillenförmigen inneren Wendelnut versehen, die derart an die äußere Wendelnut angepasst ist, dass die innere und die äußere Wendelnut über in ihnen laufende Kugeln miteinander in Eingriff stehen und so ein Kugelumfangsgetriebe eines Kugelumlaufspindelantriebs bilden. Die Antriebshülse ist im Ventilgehäuse drehbar, aber axialfest gelagert und von einem innerhalb des Ventilgehäuses vorgesehenen Antriebsmotor drehbeaufschlagt. Der Antriebsmotor und die Antriebshülse bilden unter Einbeziehung des in die Ventilhülse integrierten Abschnitts mit der rillenförmigen äußeren Wendelnut und den Kugeln den Antrieb für die Ventilhülse.

Die Ventilhülse ist somit identisch mit der Spindel des so gebildeten Kugelumlaufspindelantriebs, Vorteil dieser erfindungsgemäßen Bauweise des Koaxialventils ist der insbesondere durch die Integration der Ventilhülse in den Kugelumlaufspindelantrieb erzielte kompakte Aufbau und das daraus resultierende geringe Gewicht.

Durch die Lagerung des den Antriebsmotor und den Kugelumlaufspindelantrieb aufweisenden Antriebssystems um einen auf der Mittelachse der Ventilhülse liegenden Kugelmittelpunkt, sodass das Antriebssystem in alle Richtungen schwenkbar im Ventilgehäuse gelagert ist, wird erreicht, dass auch bei hohen Temperaturschwankungen und dadurch bedingtem Verziehen des Ventilgehäuses auch bei einer steifen Auslegung des Antriebssystems keine Zwangskräfte im Antriebssystem, also insbesondere zwischen dem Antriebsmotor und der Antriebshülse und innerhalb des die Antriebshülse aufweisenden Kugelumlaufspindelantriebs auftreten. Hierdurch wird die Reibung im gesamten Antrieb auch bei hohen Temperaturschwankungen deutlich minimiert, sodass der Antriebsmotor entsprechend schwächer und daher leichter ausgelegt werden kann, was für den Einsatz in der Raumfahrttechnik ein entscheidendes Entwicklungskriterium darstellt.
Weitere vorteilhafte Ausgestaltungen der Erfindung sind in den Unteransprüchen angegeben.

In einer vorteilhaften Ausführungsform ist die Antriebshülse über zwei axiale Wälzlager im Ventilgehäuse gelagert. Diese Lagerung dient der axialen Fixierung der Antriebshülse innerhalb des Ventilgehäuses und sorgt somit für eine definierte axiale Positionierung des gesamten Kugelumlaufspindelantriebs.

Vorzugsweise sind die beiden axialen Wälzlager an ihrem jeweils axial äußeren Lagerring jeweils mit einer ringförmigen, kalottenförmigen, konvexen Außenfläche versehen, wobei sich diese konvexen Außenflächen jeweils auf einer zugeordneten konkaven Innenfläche im Inneren des Ventilgehäuses abstützen und wobei die jeweiligen kalottenförmigen konkaven und konvexen Flächen denselben auf der Mittelachse der Ventilhülse liegenden Kugelmittelpunkt aufweisen. Hierdurch wird das gesamte Antriebssystem einschließlich des Kugelumlaufspindelantriebs um den Kugelmittelpunkt geringfügig in alle Richtungen schwenkbar gelagert, so dass im Betrieb insbesondere durch thermische Einflüsse auftretende Verspannungen im Gehäuse und/oder im Antrieb ausgeglichen werden können, damit die Dichtheit des Ventils im geschlossenen Zustand zuverlässig gewährleistet ist und damit auch bei Verspannungen im Ventilgehäuse und/oder im Antrieb eine reibungsarme Betätigung der Ventilhülse möglich ist.

Diese Eigenschaften werden dadurch verbessert, dass in einer vorteilhaften Weiterbildung dieser Ausgestaltungsform der Verschlusskörper einen ersten Teil aufweist, der mit einer zur Ventilhülse weisenden kalottenförmigen konkaven Fläche versehen ist, in der eine kalottenförmige konvexe Fläche eines zweiten Teils des Verschlusskörpers derart schwenkbar gelagert ist, dass die beiden Teile zwar in Axialrichtung miteinander verbunden sind, aber sich entlang der kalottenförmigen Flächen relativ zueinander bewegen können, wobei der Kugelmittelpunkt der kalottenförmigen Flächen des Verschlusskörpers mit dem Kugelmittelpunkt der kalottenförmigen Flächen der beiden axialen Wälzlager zusammenfällt. Hierdurch wird auch der den Dichtsitz aufweisende zweite Teil des Verschlusskörpers um denselben Kugelmittelpunkt schwenkbar gelagert, wodurch die Zuverlässigkeit des Dichtsitzes auch beim Auftreten von Verspannungen im Ventilgehäuse und/oder im Antrieb weiter verbessert wird.

Vorzugsweise ist der Verschlusskörper an seinem zweiten Teil mit einem Ventilsitz versehen, der mit dem die Fluidaustrittsöffnung begrenzenden stirnseitigen Umfangsrand des benachbarten Endes der Ventilhülse abdichtend zusammenwirkt, wenn das Ventil geschlossen ist.

Insbesondere von Vorteil ist es, wenn die Antriebshülse vom Rotor des Antriebsmotors umgeben und mit diesem drehfest verbunden ist. Diese Anordnung des Motors koaxial zur Ventilhülse sorgt für einen besonders kompakten Aufbau des Koaxialventils. Dabei ist vorteilhafterweise der Rotor von einem Stator des Antriebsmotors umgeben und der Stator ist drehfest im Ventilgehäuse gelagert.

Vorteilhaft ist es auch, wenn der Stator im Ventilgehäuse zumindest geringfügig axial verschiebbar gelagert ist, so dass durch diese Axialverschiebbarkeit thermische Expansionen einzelner Elemente des Antriebs kompensiert werden können.

In einer anderen vorteilhaften Ausgestaltung ist der Rotor innerhalb des Stators mittels zumindest zweier radialer Wälzlager drehbar gelagert. Das Vorsehen dieser Wälzlager sorgt dafür, dass der Lagerspalt zwischen Rotor und Stator während des Betriebs und insbesondere unter thermischen Einflüssen konstant bleibt.

Vorzugsweise ist der Antriebsmotor ein elektrischer Antriebsmotor. Es ist aber auch denkbar, dass beispielsweise ein hydraulischer Antriebsmotor verwendet wird.

Die Erfindung wird nachfolgend anhand eines Beispiels unter Bezugnahme auf die Zeichnung näher erläutert.

### KURZE BESCHREIBUNG DER ZEICHNUNG

### Es zeigen:

- Fig. 1: einen Längsschnitt durch ein erfindungsgemäßes Koaxialventil;
- Fig. 2: einen Ausschnitt gemäß A in Fig. 1; und
- Fig. 3: eine Ausschnitt gemäß B in Fig. 1.

### DARSTELLUNG VON BEVORZUGTEN AUSFÜHRUNGSBEISPIELEN

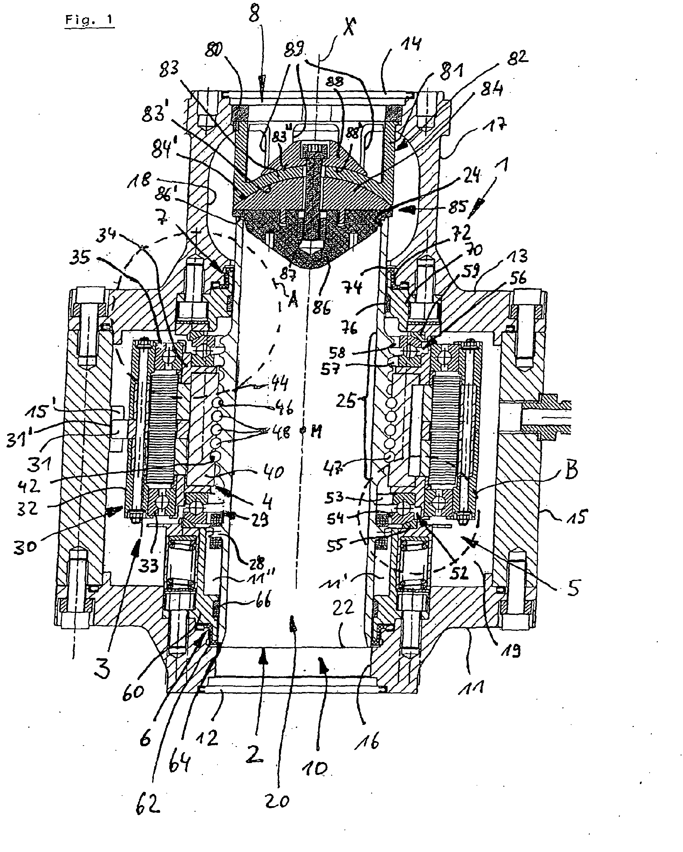

Fig. 1 zeigt einen Längsschnitt durch ein erfindungsgemäßes Koaxialventil. In einem Ventilgehäuse 1 ist ein Strömungskanal 10 vorgesehen, der eine Fluideintrittsöffnung 12 und eine Fluidaustrittsöffnung 14 aufweist. Die Fluideintrittsöffnung 12 und die Fluidaustrittsöffnung 14 sind dabei an voneinander abgewandten Enden des Ventilgehäuses 1 so ausgebildet, dass sich der Strömungskanal 10 von der Fluideintrittsöffnung 12 zur Fluidaustrittsöffnung 14 gerade erstreckt. Der Strömungskanal 10, die Fluideintrittsöffnung 12 und die Fluidaustrittsöffnung 14 sind dabei im Querschnitt kreisförmig gestaltet und koaxial zueinander angeordnet, wobei sie eine gemeinsame Mittelachse X aufweisen. Im Bereich der Fluideintrittsöffnung 12 ist der Strömungskanal 10 von einem ersten zylindrischen Bohrungsabschnitt 16 gebildet. Der erste zylindrische Bohrungsabschnitt 16 ist in einem ersten stirnseitigen Deckelteil 11 des Ventilgehäuses 1 vorgesehen. Die Fluidaustrittsöffnung 14 ist in einem zweiten stirnseitigen Deckelteil 13 auf der vom ersten stirnseitigen Deckelteil abgewandten Seite des Ventilgehäuses 1 vorgesehen. Zwischen dem ersten stirnseitigen Deckelteil 11 und dem zweiten stirnseitigen Deckelteil 13 erstreckt sich ein zylindrischer Mittelabschnitt 15 des Ventilgehäuses 1. Die beiden Deckelteile 11, 13 sind mit dem zylindrischen Mittelabschnitt 15 verschraubt, wie in Fig. 1 dargestellt ist.

Das zweite stirnseitige Deckelteil 13 weist einen in Richtung der Achse X nach außen hervorstehenden zylindrischen Gehäuseansatz 17 auf, der an seinem freien Ende mit der Fluidaustrittsöffnung 14 versehen ist. Im Inneren des zylindrischen Gehäuseansatzes 17 ist ein zweiter im wesentlichen zylindrischer Bohrungsabschnitt 18 des Strömungskanals 10 ausgebildet, wobei dieser Bohrungsabschnitt einen Durchmesser aufweist, der größer ist als jener des ersten zylindrischen Bohrungsabschnitts 16. Zwischen dem ersten zylindrischen Bohrungsabschnitt 16 und dem zweiten im wesentlichen zylindrischen Bohrungsabschnitt 18 des Strömungskanals 10 ist im Bereich des zylindrischen Mittelabschnitts 15 des Ventilgehäuses 1 ein zylindrischer Innenraum 19 ausgebildet, dessen Durchmesser deutlich größer ist als jener des zweiten im wesentlichen zylindrischen Bohrungsabschnitts 18.

Im Strömungskanal 10 ist eine rohrförmige Ventilhülse 2 koaxial zum Strömungskanal 10 zwischen dem ersten zylindrischen Bohrungsabschnitt 16 und dem zweiten im wesentlichen zylindrischen Bohrungsabschnitt 18 angeordnet. Die Ventilhülse 2 ist im Querschnitt kreisringförmig ausgebildet und ist entlang ihrer Achse, die mit der Mittelachse X identisch ist, verfahrbar. Die Ventilhülse 2 ist als gerades Rohr ausgebildet und umgibt einen inneren Kanal 20, der mit einer der Fluideintrittsöffnung 12 benachbarten stirnseitigen Einströmöffnung 22 und einer zur Fluidaustrittsöffnung 14 weisenden stirnseitigen Ausströmöffnung 24 versehen ist. Der innere Kanal 20 bildet auf diese Weise einen zentralen Abschnitt des Strömungskanals 10 zwischen dem ersten zylindrischen Bohrungsabschnitt 16 und dem zweiten im wesentlichen zylindrischen Bohrungsabschnitt 18.

Im Innenraum 19 ist ein Antrieb 3 vorgesehen, der die Ventilhülse 2 zur Bewegung in Axialrichtung entlang der Mittelachse X beaufschlagt und der nachstehend beschrieben wird.

Der Antrieb 3 umfasst einen innerhalb des Innenraums 19 angeordneten und als Elektromotor ausgebildeten Antriebsmotor 30, der die Ventilhülse 2 umgibt, und ein Kugelumlaufgetriebe 4, das den Motor 30 antriebstechnisch mit der Ventilhülse 2 koppelt. Der Motor 30 und das Kugelumlaufgetriebe 4 sind ebenfalls koaxial um die Ventilhülse 2 herum angeordnet, so dass die Drehachsen des Motors 30 und des Kugelumlaufgetriebes 4 im Normalfall, in dem keine durch mechanische Spannungen bedingten Verformungen des Ventilgehäuses 1 auftreten, mit der Mittelachse X übereinstimmen.

Der Motor 30 ist als Innenläufermotor ausgestaltet und besitzt einen radial außen gelegenen Stator 32 sowie einen radial innen gelegenen Rotor 34. Der Stator 32 ist mittels zumindest einer radial nach außen hervorstehenden Nase 31 an einer radial einwärts gerichteten Rippe 15' des zylindrischen Mittelabschnitts 15 drehfest, aber axial verschiebbar gelagert. Diese Axialverschiebbarkeit ermöglicht eine geringe Relativbewegung in Axialrichtung zwischen dem Ventilgehäuse 1 und dem Antrieb 3, wodurch Verspannungen des Antriebs 3 innerhalb des Ventilgehäuses 1 aufgrund von unterschiedlichen thermischen Ausdehnungen des Antriebs 3 und des Ventilgehäuses 1 vermieden werden. Zu demselben Zweck ist zwischen der radialen Außenkante der Nase 31 und der Innenwandung des zylindrischen Mittelabschnitts 15 zusätzlich ein kleiner Spalt 31' vorgesehen, der auch eine radiale Relativbewegung zwischen dem Antrieb 3 und dem Ventilgehäuse 1 ermöglicht.

Der Stator 32 des Motors 30 ist auf allgemein bekannte Weise mit einer elektrischen Wicklung versehen. Der radial innerhalb des Stators 32 vorgesehene Rotor 34 ist an seinem Außenumfang in bekannter Weise mit entsprechenden Permanentmagneten versehen. Der Rotor 34 ist mittels zweier radialer Wälzlager 33, 35 im Stator 32 reibungsarm drehgelagert. Diese Lagerung des Rotors 34 innerhalb des Stators 32 mittels der Wälzlager 33, 35 sorgt dafür, dass zwischen dem Rotor 34 und dem Stator 32 ein definierter radialer Abstand gewährleistet ist, auch wenn extreme thermische Einflüsse auf den Antrieb 3 einwirken.

Radial innerhalb des Rotors 34 ist eine zylindrische Antriebshülse 40 vorgesehen, die Teil des Kugelumlaufgetriebes 4 ist und die mit dem Rotor 34 drehfest und axialfest verbunden ist. Die Antriebshülse 40 ist ebenfalls koaxial zur Ventilhülse 2 angeordnet und die Mittelachse der Antriebshülse 40 ist mit der Mittelachse X der Ventilhülse 2 identisch.

Die Antriebshülse 40 ist an ihrer radial inneren Seite mit zumindest einer rillenförmigen inneren Wendelnut 42 versehen. Die Antriebshülse 40 umgibt einen mittleren, radial nach außen verdickten Abschnitt 25 der Ventilhülse 2. Dieser mittlere Abschnitt 25 der Ventilhülse 2 bildet einen inneren Antriebskörper 44, der integral mit der Ventilhülse 2 ausgebildet ist und an dessen radial äußerem Umfang zumindest eine rillenförmige äußere Wendelnut 46 ausgebildet ist, wobei sich die rillenförmige äußere Wendelnut 46 in Axialrichtung über nahezu die gesamte Länge des mittleren Abschnitts 25 erstreckt, der in Axialrichtung länger ist als der Abschnitt der Antriebshülse 40, der mit der inneren Wendelnut 42 versehen ist.

Zwischen dem radial äußeren Umfang des durch den mittleren Abschnitt 25 der Ventilhülse 2 gebildeten inneren Antriebskörpers 44 und dem radial inneren Umfang der Antriebshülse 40 ist lediglich ein geringer Spaltabstand vorgesehen, so dass die innere Wendelnut 42 und die äußere Wendelnut 46 bei der in Fig. 1 gezeigten Überdeckung einen wendelförmigen Kugelkanal 47 von im wesentlichen kreisförmigem Querschnitt bilden, in welchem eine Vielzahl von Kugeln 48 aufgenommen sind. Auf diese Weise werden vom inneren Antriebskörper 44, den Kugeln 48 und der Antriebshülse 40 das Kugelumlaufgetriebe 4 gebildet und vom Antrieb 3 und dem Kugelumlaufgetriebe 4 ein Kugelumlaufspindelantrieb 5 für die darin integrierte Ventilhülse 2 geschaffen.

Die Ventilhülse 2 ist im Bereich ihres mit der Einströmöffnung 22 versehen Endes in einem in das erste stirnseitige Deckelteil 11 eingesetzten ersten Gleitringdichtungseinsatz 6 abdichtend radial geführt. Ebenso ist die Ventilhülse 2 im Bereich ihres entgegengesetzten, mit der Ausströmöffnung 24 versehenen Endes in einem zweiten Gleitringdichtungseinsatz 7 abdichtend axial geführt, wobei der zweite Gleitringdichtungseinsatz 7 in das zweite stirnseitige Deckelteil 13 eingesetzt ist.

Der erste Gleitringdichtungseinsatz 6 besteht aus einem ersten ringförmigen Einsatzkörper 60, der die Ventilhülse 2 umgibt und mit einer Ringdichtung 62 versehen ist, deren Dichtlippe 64 am Außenumfang der Ventilhülse 2 anliegt und diese abdichtet. Axial einwärts der Dichtlippe 64, also von der Einströmöffnung 22 abgewandt, ist im ersten Einsatzkörper 60 ein Gleitring 66 vorgesehen, der den Außenumfang der Ventilhülse 2 umgibt und diese unter minimalster Reibung in Axialrichtung führt.

In analoger Weise weist der zweite Gleitringdichtungseinsatz 7 einen zweiten Einsatzkörper 70 auf, der im zweiten stirnseitigen Deckelteil 13 befestigt ist. Der zweite Einsatzkörper 70 ist mit einer ringförmigen Dichtung 72 versehen, deren radial einwärts gerichtete Dichtlippe 74 die Ventilhülse 2 an ihrem Außenumfang umgibt und abdichtet. Axial einwärts von der Dichtlippe 74, also von der Ausströmöffnung 24 abgewandt, ist im zweiten Einsatzkörper 70 ein Gleitring 76 vorgesehen, der die Ventilhülse 2 in diesem Bereich radial umgibt und unter minimalster Reibung axial führt.

Der aus dem Antriebsmotor 3 und dem Kugelumlaufgetriebe 4 einschließlich der Ventilhülse 2 bestehende Kugelumlaufspindelantrieb 5 ist innerhalb des Ventilgehäuses 1 geringfügig in alle Richtungen um einen Kugelmittelpunkt M herum schwenkbar gelagert, wobei der Kugelmittelpunkt M in weiter unten definierter Weise auf der Mittelachse X liegt. Diese Lagerung erfolgt mittels zweier koaxial zur Mittelachse X liegender axialer Wälzlager 52, 56, deren jeweiliger axial innerer Lagerring 53, 57 an zwei axial voneinander abgewandten Stirnseiten des Rotors 34 angebracht sind. Die jeweiligen axial äußeren Lagerringe 54, 58 der axialen Wälzlager 52, 56 stützen sich auf noch zu beschreibende Weise am ersten stirnseitigen Deckelteil 11 beziehungsweise am zweiten stirnseitigen Deckelteil 13 ab. Dazu ist am ersten stirnseitigen Deckelteil 11 ein koaxial zur Mittelachse X angeordneter Stützring 55 vorgesehen und analog ist am zweiten stirnseitigen Deckelteil 13 ein koaxial zur Mittelachse X angeordneter Stützring 59 vorgesehen.

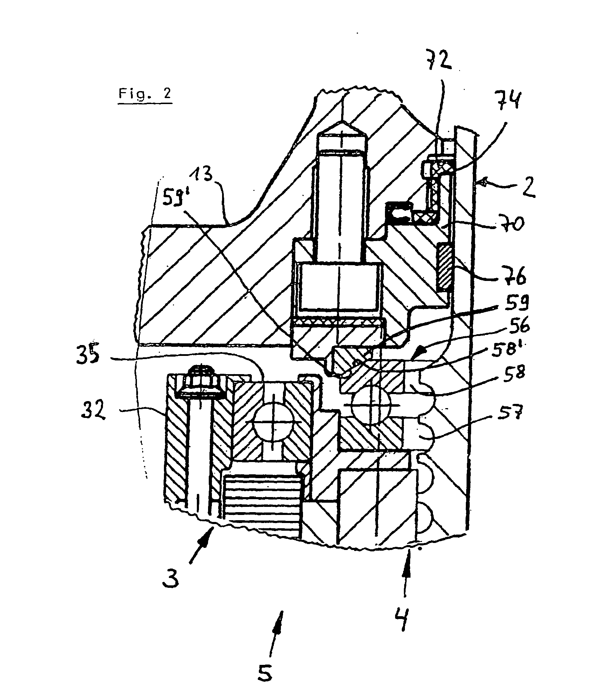

Anhand der Fig. 2, die den Ausschnitt A aus Fig. 1 zeigt, wird nun die Lagerung des Kugelumlaufspindelantriebs 5 im Ventilgehäuse 1 beschrieben. Die Beschreibung erfolgt anhand des in Fig. 1 oberen axialen Wälzlagers 56, wobei die Abstützung des in Fig. 1 unteren axialen Wälzlagers 52 am ersten stirnseitigen Deckelteil 11 in der gleichen Weise ausgebildet ist.

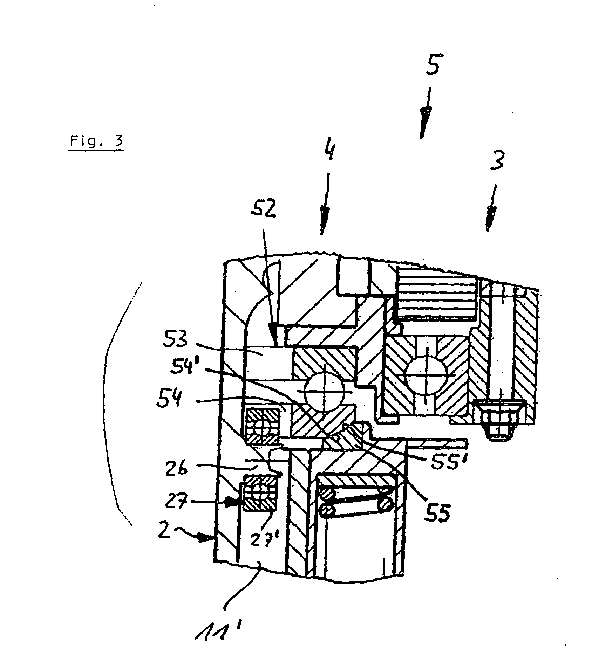

Der Stützring 59 ist am zweiten Einsatzkörper 70, der mit dem zweiten stirnseitigen Deckelteil 13 verbunden ist, auf allgemein bekannte Weise befestigt. Auf seiner axial und radial einwärts weisenden Seite ist der Stützring 59 mit einer eine Stützfläche bildenden kalottenförmigen, konkaven Innenfläche 59' versehen, auf der sich eine am axial und radial äußeren Bereich des axial äußeren Lagerrings 58 des axialen Wälzlagers 56 ausgebildete, ebenfalls eine Stützfläche bildende ringförmige, kalottenförmige, konvexe Außenfläche 58' zusammenwirkt. Auf dieselbe Weise sind auch der axial äußere Lagerring 54 des axialen Wälzlagers 52 mit einer ringförmigen kalottenförmigen, konvexen Außenfläche 54' und der am ersten Einsatzkörper 60 des ersten stirnseitigen Deckelteils 11 befestigte Stützring 55 mit einer kalottenförmigen, konkaven Innenfläche 55' versehen, wie in Fig. 3 dargestellt ist.

Die konvexen Flächen 54' und 58' sind ringförmige Kugelsegmente einer virtuellen Kugel mit dem Mittelpunkt M auf der Mittelachse X. Auch die konkaven Flächen 55' und 59' sind ringförmige Kugelsegmente einer virtuellen Kugel mit demselben Mittelpunkt M. Auf diese Weise kann der gesamte Kugelumlaufspindelantrieb 5 unter Relativbewegung zwischen den Kugelsegmentflächen 54' und 55' sowie 58' und 59' geringfügig um den Mittelpunkt M verschwenkt werden.

Fig. 3 zeigt außerdem, dass die Ventilhülse 2 im Bereich des ersten stirnseitigen Deckelteils 11 mit einem radial nach außen hervorstehenden Zapfen 26 versehen ist, auf dem ein Wälzlager 27 befestigt ist. Der Zapfen 26 und das Wälzlager 27 greifen dabei in eine parallel zur Achse X verlaufende Längsnut 11' des ersten stirnseitigen Deckelteils 11 ein, wobei das Wälzlager 27 mit seinem Außenring 27' auf einer Längsseitenwand der Längsnut 11' abrollt. In analoger Weise ist auf der gegenübergelegenen Seite an der Ventilhülse 2 ein radial nach außen hervorstehender Zapfen 28 gebildet, auf welchem ein Wälzlager 29 angebracht ist, das in einer auf dieser Seite im ersten stirnseitigen Deckelteil 11 vorgesehenen Längsnut 11" in gleicher Weise geführt ist, wie in Fig. 1 zu sehen ist. Diese beiden seitlichen Führungen der Ventilhülse 2 sorgen dafür, dass die Ventilhülse 2 relativ zum Ventilgehäuse 1 verdrehgesichert ist und sich - mit Ausnahme der geringfügigen Schwenkbarkeit um den Mittelpunkt M - nur in Richtung der Achse X bewegen kann. Die Verwendung der Wälzlager 27 und 29 als Führungsrollen sorgt dabei für eine Minimierung der Reibung in der jeweiligen Axialführung.

Im zweiten stirnseitigen Deckelabschnitt ist im Inneren des zylindrischen Gehäuseansatzes 17, also in dem im wesentlichen zylindrischen Bohrungsabschnitt 18 des Strömungskanals 10, ein Verschlusskörper 8 vorgesehen, der mit der Ausströmöffnung 24 der Ventilhülse 2 zum Öffnen und Schließen des Ventils zusammenwirkt. Der Verschlusskörper 8 umfasst einen ringförmigen Basisabschnitt 80, der koaxial zur Mittelachse X im Bereich der Fluidaustrittsöffnung 14 in das zweite stirnseitige Deckelteil 13 eingesetzt ist. Mit dem ringförmigen Basisabschnitt 80 ist ein rohrförmiger Sockelabschnitt 81 verbunden, der ebenfalls koaxial zur Mittelachse X angeordnet ist und einen ersten Teil 82 des Verschlusskörpers 8 bildet und der sich in Axialrichtung nach innen in den im wesentlichen zylindrischen Bohrungsabschnitt 18 hinein erstreckt. Der zylindrische Sockelabschnitt 81 ist in seiner Umfangswand mit einer Mehrzahl von Durchbrüchen 89 versehen, die eine Fluidverbindung zwischen dem im wesentlichen zylindrischen Bohrungsabschnitt 18 des Strömungskanals 10 und der Fluidaustrittsöffnung 14 herstellen.

Die axial nach innen in das Ventilgehäuse 1 weisende Stirnwand 83 des zylindrischen Sockelabschnitts 81 ist als konkave Wand ausgebildet und mit einer konkaven Stirnfläche 83' versehen, die kalottenförmig ausgebildet ist und ein Kugelsegment einer virtuellen Kugel mit dem Mittelpunkt M darstellt. In der konkaven Stirnfläche 83' ruht eine angepasste konvexe Außenfläche 84' eines Trägerelements 84 für einen Ventilkörper 86. Das Trägerelement 84 und der Ventilkörper 86 bilden gemeinsam ein zweites Teil 85 des Verschlusskörpers 8. Auch das Trägerelement 84 und der Ventilkörper 86 sind koaxial zur Mittelachse X angeordnet, wobei die konvexe Außenfläche 84' des Trägerelements 84 ebenfalls ein kalottenförmiges Kugelsegment einer virtuellen Kugel mit dem Mittelpunkt M bildet.

Der Ventilkörper 86 ist auf der von der konvexen Außenfläche 84' abgewandten Seite des Trägerelements 84 angeordnet und weist zur Ausströmöffnung 24 der Ventilhülse 2. Der Ventilkörper 86 ist kegelförmig ausgebildet, wobei er im Bereich seines größten Umfangs mit einer einen Ventilsitz bildenden ringförmigen Stufe 86' versehen ist, die mit dem vom Umfangsrand der Ausströmöffnung 24 der Ventilhülse 2 gebildeten Ventilsitz bei geschlossenem Ventil abdichtend zusammenwirkt.

Der Ventilkörper 86 und das Trägerelement 84 sind mittels einer die konkave Stirnwand 83 zentral durchdringenden Schraube 87, die sich über ein auf der Rückseite der konkaven Stirnwand 83 des zylindrischen Sockelabschnitts 81 vorgesehenes Stützteil 88 gegen die Stirnwand abstützt, und das erste Teil 82 gegen das zweite Teil 85 des Verschlusskörpers 8 verspannt. Das Stützteil 88 ist dabei mit einer zur Stirnwand 83 weisenden konkaven Stirnfläche 88' versehen, die einen Kugelsektor einer virtuellen Kugel mit dem Mittelpunkt M bildet. Auch die zur Fluidaustrittsöffnung 14 weisende konvexe Rückseitenfläche 83" der Stirnwand 83 ist Teil einer Kugelfläche mit dem Mittelpunkt M.

Diese Konstruktion des Verschlusskörpers 8 mit ihren Kugelflächen, die denselben Mittelpunkt M aufweisen wie die Kugelflächen der Lagerung des Kugelumlaufspindelantriebs 5 im Ventilgehäuse 1, bewirkt, dass auch der Ventilkörper 86 geringfügig um den Mittelpunkt M schwenken kann, so dass bei einem Verschwenken des Kugelumlaufspindelantriebs 5 um den Mittelpunkt M keine über den Umfang ungleichmäßige Belastung der den Ventilsitz des Verschlussteils 8 bestimmenden ringförmigen Stufe 86' des Ventilkörpers 86 auftritt. Das heißt, dass auch im Fall eines geringfügigen Verschwenkens des Kugelumlaufspindelantriebs 5 und damit der Ventilhülse 2 ein zuverlässiges Abdichten des Ventils im Bereich des Ventilkörpers 86 und der Ausströmöffnung 24 gewährleistet ist. Außerdem werden auf diese Weise jegliche externe Zwangskräfte vom Kugelumlaufspindelantrieb 5 ferngehalten.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

### Es bezeichnen:

- 1: Ventilgehäuse
- 2: Ventilhülse
- 3: Antrieb
- 4: Kugelumlaufgetriebe
- 5: Kugelumlaufspindelantrieb
- 6: erster Gleitringdichtungseinsatz
- 7: zweiter Gleitringdichtungseinsatz
- 8: Verschlusskörper
- 10: Strömungskanal
- 11: erstes stirnseitiges Deckelteil
- 11': Längsnut
- 11": Längsnut
- 12: Fluideintrittsöffnung
- 13: zweites stirnseitiges Deckelteil
- 14: Fluidaustrittsöffnung
- 15: zylindrischer Mittelabschnitt
- 15': Rippe
- 16: erster zylindrischer Bohrungsabschnitt
- 17: zylindrischer Gehäuseansatz
- 18: zweiter im wesentlichen zylindrischer Bohrungsabschnitt
- 19: Innenraum
- 20: innerer Kanal
- 22: Einströmöffnung
- 24: Ausströmöffnung
- 25: mittlerer Abschnitt von 2
- 26: Zapfen
- 27: Wälzlager
- 27': Außenring
- 28: Zapfen

- 29: Wälzlager
- 30: Antriebsmotor
- 31: Nase
- 31': Spalt
- 32: Stator
- 33: radiales Wälzlager
- 34: Rotor
- 35: radiales Wälzlager
- 40: Antriebshülse
- 42: innere Wendelnut
- 44: innerer Antriebskörper
- 46: äußere Wendelnut
- 47: Kugelkanal
- 48: Kugeln
- 52: axiales Wälzlager
- 53: axialer innerer Lagerring
- 54: axialer äußerer Lagerring
- 54': konvexe Außenfläche
- 55: Stützring
- 55': konkave Innenfläche
- 56: axiales Wälzlager
- 57: axialer innerer Lagerring
- 58: axialer äußerer Lagerring
- 58': konvexe Außenfläche
- 59: Stützring
- 59': konkave Innenfläche
- 60: erster Einsatzkörper
- 62: Ringdichtung
- 64: Dichtlippe
- 66: Gleitring
- 70: zweiter Einsatzkörper
- 72: ringförmige Dichtung

- 74: Dichtlippe
- 76: Gleitring
- 80: ringförmiger Basisabschnitt
- 81: zylindrischer rohrförmiger Sockelabschnitt
- 82: erstes Teil von 8
- 83: Stirnwand
- 83': konkave Stirnfläche
- 83": konvexe Rückseitenfläche
- 84: Trägerelement
- 84': konvexe Außenfläche
- 85: zweites Teil von 8
- 86: Ventilkörper
- 86': ringförmige Stufe
- 87: Schraube
- 88: Stützteil
- 88': konkave Stirnfläche
- 89: Durchbrüche

- X: Mittelachse
- M: Kugelmittelpunkt

## Patentansprüche

1. Koaxialventil mit
- einem Ventilgehäuse (1), das zumindest eine Fluideintrittsöffnung (12) und zumindest eine Fluidaustrittsöffnung (14) sowie einen diese miteinander verbindenden Strömungskanal (10) aufweist;
- einer rohrförmigen Ventilhülse (2), die in einem Abschnitt des Strömungskanals (10) verdrehgesichert, aber axial verfahrbar vorgesehen ist und die eine Einströmöffnung (22) sowie eine Ausströmöffnung (24) für das Fluid aufweist, die beide in den Strömungskanal (10) münden;
- einem im Ventilgehäuse (1) vorgesehenen Verschlusskörper (8), der koaxial zur Ventilhülse (2) angeordnet ist und der ausgebildet ist, um die Einströmöffnung (22) oder die Ausströmöffnung (24) der Ventilhülse (2) zu erschließen, und
- einem Antrieb (3) zum axialen Verfahren der Ventilhülse (2),
- wobei die Ventilhülse (2) zumindest abschnittsweise an ihrem Außenumfang mit zumindest einer rillenförmigen äußeren Wendelnut (46) versehen ist,
- wobei die Ventilhülse (2) im Abschnitt der rillenförmigen äußeren Wendelnut (46) von einer zur Ventilhülse (2) koaxialen Antriebshülse (40) umgeben ist,
- wobei die Antriebshülse (40) an ihrem Innenumfang mit zumindest einer rillenförmigen inneren Wendelnut (42) versehen ist, die derart an die äußere Wendelnut (46) angepasst ist, dass die innere und die äußere Wendelnut (42, 46) über in ihnen laufende Kugeln (48) miteinander in Eingriff stehen und so ein Kugelumlaufgetriebe (4) eines Kugelumlaufspindelantriebs (5) bilden
**dadurch gekennzeichnet,**
- **dass** die Antriebshülse (40) im Ventilgehäuse (1) drehbar, aber axial fest gelagert und von einem innerhalb des Ventilgehäuses (1) vorgesehenen Antriebsmotor (30) drehbeaufschlagt ist,
- **dass** das den Antriebsmotor (30) und den Kugelumlaufspindelantrieb (5) aufweisende Antriebssystem um einen auf der Mittelachse (X) der Ventilhülse (2) liegenden Kugelmittelpunkt (M) in alle Richtungen schwenkbar im Ventilgehäuse (1) gelagert ist..

2. Koaxialventil nach Anspruch 1,
**dadurch gekennzeichnet,**
**dass** die Antriebshülse (40) über zwei axiale Wälzlager (52, 56) im Ventilgehäuse (1) gelagert ist.

3. Koaxialventil nach Anspruch 2,
**dadurch gekennzeichnet,**
- **dass** die beiden axialen Wälzlager (52, 56) an ihrem jeweils axial äußeren Lagerring (54, 58) jeweils mit einer ringförmigen, kalottenförmigen, konvexen Außenfläche (54', 58') versehen sind, wobei sich diese konvexen Außenflächen (54', 58') jeweils auf einer zugeordneten konkaven Innenfläche (55', 59') im Inneren des Ventilgehäuses (1) abstützen und
- wobei die jeweiligen kalottenförmigen konkaven und konvexen Flächen (54', 58', 55', 59') denselben auf der Mittelachse (X) der Ventilhülse (1) liegenden Kugelmittelpunkt (M) aufweise.

4. Koaxialventil nach Anspruch 3,
**dadurch gekennzeichnet,**
- **dass** der Verschlusskörper (8) einen ersten Teil (82) aufweist, der mit einer zur Ventilhülse (2) weisenden kalottenförmigen konkaven Fläche (83') versehen ist, in der eine kalottenförmige konvexe Fläche (84') eines zweiten Teils (85) des Verschlusskörpers (8) derart schwenkbar gelagert ist, dass die beiden Teile (82, 85) zwar in Axialrichtung miteinander verbunden sind, aber sich entlang der kalottenförmigen Flächen (83', 84') relativ zueinander bewegen können,
- wobei der Kugelmittelpunkt (M) der kalottenförmigen Flächen (83', 84') des Verschlusskörpers (8) mit dem Kugelmittelpunkt (M) der kalottenförmigen Flächen (54', 58', 55', 59') der beiden axialen Wälzlager (52, 56) zusammenfällt.

5. Koaxialventil nach einem der vorhergehenden Ansprüche,
**dadurch gekennzeichnet,**
**dass** die Antriebshülse (40) von einem Rotor (34) des Antriebsmotors (30) umgeben und mit diesem drehfest verbunden ist.

6. Koaxialventil nach Anspruch 5,
**dadurch gekennzeichnet,**
- **dass** der Rotor (34) von einem Stator (32) des Antriebsmotors (30) umgeben ist und
- **dass** der Stator (32) drehfest im Ventilgehäuse (1) gelagert ist.

7. Koaxialventil nach Anspruch 6,
**dadurch gekennzeichnet,**
**dass** der Stator (32) im Ventilgehäuse (1) axial verschiebbar gelagert ist.

8. Koaxialventil nach Anspruch 6 oder 7,
**dadurch gekennzeichnet,**
**dass** der Rotor (34) innerhalb des Stators (32) mittels zumindest zweier radialer Wälzlager (33, 35) drehbar gelagert ist.

9. Koaxialventil nach einem der vorhergehenden Ansprüche,
**dadurch gekennzeichnet,**
**dass** der Antriebsmotor (30) ein elektrischer Antriebsmotor ist.

## Claims

1. Coaxial valve having
- a valve housing (1) which has at least one fluid inlet opening (12) and at least one fluid outlet opening (14) and a flow duct (10) which connects said fluid inlet opening (12) and fluid outlet opening (14) to one another;
- a tubular valve sleeve (2) which is provided in a section of the flow duct (10) so as to be rotationally locked but axially movable and which has an inflow opening (22) and an outflow opening (24) for the fluid, which inflow opening (22) and outflow opening (24) both open out into the flow duct (10);
- a closure body (8) which is provided in the valve housing (1) and which is arranged coaxially with respect to the valve sleeve (2) and which is designed to close off the inflow opening (22) or the outflow opening (24) of the valve sleeve (2), and
- a drive (3) for axially moving the valve sleeve (2),
- with the valve sleeve (2) being provided at least in sections over its outer periphery with at least one channel-shaped outer helical groove (46),
- with the valve sleeve (2) being surrounded, in the section of the channel-shaped outer helical groove (46), by a drive sleeve (40) which is coaxial with respect to the valve sleeve (2),
- with the drive sleeve (40) being provided at its inner periphery with at least one channel-shaped inner helical groove (42) which is matched to the outer helical groove (46) in such a way that the inner helical groove (42) and the outer helical groove (46) are in engagement with one another by means of balls (48) which run therein, and said inner helical groove (42) and outer helical groove (46) thereby form a recirculating-ball gearing (4) of a recirculating-ball spindle drive (5),
**characterized**
- **in that** the drive sleeve (40) is mounted in the valve housing (1) so as to be rotatable but axially fixed, and is acted on in rotation by a drive motor (30) which is provided within the valve housing (1),
- **in that** the drive system which has the drive motor (30) and the recirculating-ball spindle drive (5) is mounted in the valve housing (1) so as to be pivotable in all directions about a ball central point (M) which is situated on the central axis (X) of the valve sleeve (2).

2. Coaxial valve according to Claim 1,
**characterized**
**in that** the drive sleeve (40) is mounted in the valve housing (1) by means of two axial rolling bearings (52, 56).

3. Coaxial valve according to Claim 2,
**characterized**
- **in that** the two axial rolling bearings (52, 56) are each provided, on their axially outer bearing ring (54, 58) in each case, with an annular, spherical-cap-shaped, convex outer surface (54', 58'), with said convex outer surfaces (54', 58') being supported in each case on an associated concave inner surface (55', 59') in the interior of the valve housing (1), and
- with the respective spherical-cap-shaped, concave and convex surfaces (54', 58', 55', 59') having the same ball central point (M) which lies on the central axis (X) of the valve sleeve (1).

4. Coaxial valve according to Claim 3,
**characterized**
- **in that** the closure body (8) has a first part (82) which is provided with a spherical-cap-shaped, concave surface (83') which points towards the valve sleeve (2) and in which a spherical-cap-shaped, convex surface (84') of a second part (85) of the closure body (8) is pivotably mounted in such a way that, although the two parts (82, 85) are connected to one another in the axial direction, said two parts (82, 85) can move relative to one another along the spherical-cap-shaped surfaces (83', 84'),
- with the ball central point (M) of the spherical-cap-shaped surfaces (83', 84') of the closure body (8) coinciding with the ball central point (M) of the spherical-cap-shaped surfaces (54', 58', 55', 59') of the two axial rolling bearings (52, 56).

5. Coaxial valve according to one of the preceding claims,
**characterized**
**in that** the drive sleeve (40) is surrounded by and rotationally fixedly connected to a rotor (34) of the drive motor (30).

6. Coaxial valve according to Claim 5,
**characterized**
- **in that** the rotor (34) is surrounded by a stator (32) of the drive motor (30) and
- **in that** the stator (32) is rotationally fixedly mounted in the valve housing (1).

7. Coaxial valve according to Claim 6,
**characterized**
**in that** the stator (32) is mounted in an axially movable manner in the valve housing (1).

8. Coaxial valve according to Claim 6 or 7,
**characterized**
**in that** the rotor (34) is rotatably mounted within the stator (32) by means of at least two radial rolling bearings (33, 35).

9. Coaxial valve according to one of the preceding claims,
**characterized**
**in that** the drive motor (30) is an electric drive motor.

## Revendications

1. Soupape axiale comprenant
- un boîtier de soupape (1), qui présente au moins une ouverture d'entrée de fluide (12) et au moins une ouverture de sortie de fluide (14) ainsi qu'un canal d'écoulement (10) reliant les ouvertures entre elles ;
- un manchon de soupape (2) de forme tubulaire, qui est prévu dans une partie du canal d'écoulement (10) de façon bloquée en rotation, mais coulissant dans le sens axial et qui présente une ouverture d'entrée (22) ainsi qu'une ouverture de sortie (24) pour le fluide, lesquelles ouvertures débouchent dans le canal d'écoulement (10) ;
- un corps de fermeture (8) prévu dans le boîtier de soupape (1), qui est disposé coaxialement au manchon de soupape (2) et est conçu pour fermer l'ouverture d'entrée (22) ou l'ouverture de sortie (24) du manchon de soupape (2), et
- un entraînement (3) pour le déplacement axial du manchon de soupape (2),
- le manchon de soupape (2) étant doté au moins par tronçons sur son pourtour extérieur d'au moins une gorge hélicoïdale (46) extérieure en forme de rainure,
- le manchon de soupape (2) étant entouré dans la partie de la gorge hélicoïdale (46) extérieure en forme de rainure par un manchon d'entraînement (40) coaxial au manchon de soupape (2),
- le manchon d'entraînement (40) étant doté sur son pourtour extérieur d'au moins une gorge hélicoïdale (42) intérieure en forme de rainure, lequel manchon est adapté à la gorge hélicoïdale (46) extérieure de telle sorte que la gorge hélicoïdale intérieure et la gorge hélicoïdale extérieure (42, 46) sont en prise l'une avec l'autre au moyen de billes (48) passant dans ces gorges et forment ainsi une transmission à recirculation de billes (4) d'un entraînement de broche à recirculation de billes (5),
**caractérisée en ce que**
- le manchon d'entraînement (40) est logé dans le boîtier de soupape (1) de façon rotative, mais fixe axialement et est sollicité en rotation par un moteur d'entraînement (30) prévu à l'intérieur du boîtier de soupape (1),
- **en ce que** le système d'entraînement présentant le moteur d'entraînement (30) et l'entraînement de broche à recirculation de billes (5) est logé dans le boîtier de soupape (1) de façon à pouvoir pivoter dans toutes les directions autour d'un centre de sphère (M) disposé sur l'axe médian (X) du manchon de soupape (2).

2. Soupape coaxiale selon la revendication 1,
**caractérisée en ce que**
le manchon d'entraînement (40) est logé au moyen de deux paliers de roulement (52, 56) axiaux dans le boîtier de soupape (1).

3. Soupape coaxiale selon la revendication 2,
**caractérisée en ce que**,
- les deux paliers de roulement (52, 56) axiaux sont dotés sur leur bague de palier (54, 58) extérieure respectivement axiale d'une surface extérieure (54', 58') annulaire, en forme de calotte et convexe, ces surfaces extérieures (54', 58') convexes s'appuyant respectivement sur une surface intérieure (55', 59') concave attribuée à l'intérieur du boîtier de soupape (1) et
- les surfaces (54', 58', 55', 59') concaves et convexes respectives en forme de calotte présentant le même centre de sphère (M) situé sur l'axe médian (X) du manchon de soupape (1).

4. Soupape axiale selon la revendication 3,
**caractérisée en ce que**,
- le corps de fermeture (8) présente une première partie (82), qui est dotée d'une surface (83') concave, en forme de calotte, dirigée vers le manchon de soupape (2), surface dans laquelle une surface (84') convexe, en forme de calotte, d'une seconde partie (85) du corps de fermeture (8) est fixée de façon basculante de telle sorte que les deux parties (82, 85) sont certes reliées l'une avec l'autre dans le sens axial, mais peuvent se déplacer l'une par rapport à l'autre le long des surfaces (83', 84') en forme de calotte,
- le centre de sphère (M) des surfaces (83', 84') en forme de calotte du corps de fermeture (8) coïncidant avec le centre de sphère (M) des surfaces (54', 58', 55', 59') en forme de calotte des deux paliers de roulement (52, 56) axiaux.

5. Soupape coaxiale selon l'une quelconque des revendications précédentes,
**caractérisée en ce que**
le manchon d'entraînement (40) est entouré d'un rotor (34) du moteur d'entraînement (30) et relié à celui-ci de façon résistante en rotation.

6. Soupape coaxiale selon la revendication 5,
**caractérisée en ce que**
- le rotor (34) est entouré d'un stator (32) du moteur d'entraînement (30) et
- le stator (32) est logé dans le boîtier de soupape (1) de façon résistante en rotation.

7. Soupape coaxiale selon la revendication 6,
**caractérisée en ce que**
le stator (32) est logé dans le boîtier de soupape (1) de façon coulissante dans le sens axial.

8. Soupape coaxiale selon la revendication 6 ou 7,
**caractérisée en ce que**
le rotor (34) est logé à l'intérieur du stator (32) de façon à pouvoir tourner au moyen d'au moins deux paliers de roulement (33, 35) radiaux.

9. Soupape coaxiale selon l'une quelconque des revendications précédentes,
**caractérisée en ce que**
le moteur d'entraînement (30) est un moteur d'entraînement électrique.
